# EUROPÄISCHE PATENTSCHRIFT

(11) **EP 0 471 190 B1**
(45) Veröffentlichungstag und Bekanntmachung des Hinweises auf die Patenterteilung: **02.03.1994**
(21) Anmeldenummer: 91111760.4
(22) Anmeldetag: 15.07.1991
(51) Int. Cl.: C01B 25/163, C01B 7/03

(54) **Verfahren zur Herstellung von phosphoriger Säure**
Method for preparation of phosphorous acid
Procédé de préparation d'acide phosphoreux

(30) Priorität: 16.08.1990 DE 4025937
(43) Veröffentlichungstag der Anmeldung: 19.02.1992
(73) Patentinhaber: HOECHST AKTIENGESELLSCHAFT, 65926 Frankfurt am Main (DE)
(72) Erfinder: Tapper, Alexander, Dr., W-4050 Mönchengladbach (DE); Buhl, Horst, Dr., W-5042 Erftstadt (DE); Holz, Josef, W-5042 Erftstadt (DE)

(56) Entgegenhaltungen:
- DE-B- 1 042 551
- FR-A- 1 214 039
- US-A- 2 684 286

## Beschreibung

Es ist bekannt, Phosphorige Säure (H₃PO₃, neuerdings auch Phosphonsäure genannt) durch Hydrolyse von Phosphortrichlorid (PCl₃) herzustellen. Bei der technischen Umsetzung treten jedoch Schwierigkeiten auf, die durch folgende Sachverhalte bedingt sind:
a) hohe freiwerdende Reaktionswärme
   Die Reaktion läßt sich von der Wärmebilanz her in zwei Teilreaktionen zerlegen:
   PCl₃ (flüssig) + 3 H₂O (flüssig) → H₃PO₃ (flüssig) + 3 HCl (gasförmig). Diese Teilreaktion ist schwach exotherm.
   HCl (gasförmig) + x H₂O (flüssig) → HCl (aq.)
   Die Auflösung gasförmigen Chlorwasserstoffs in Wasser ist eine stark exotherme Reaktion. Die auftretenden hohen Temperaturen führen zu unerwünschten Nebenreaktionen. Da der größere Teil der freiwerdenden Wärmemenge durch die Lösungswärme des Chlorwasserstoffgases bedingt ist, ist in der DE-B-1 042 551 vorgeschlagen worden, die Hydrolyse von PCl₃ mit konzentrierter, rauchender Salzsäure durchzuführen. Die bei der Hydrolyse des PCl₃ freiwerdende Wärmemenge sollte die zur Entfernung des auf diese Weise zugeführten Chlorwasserstoffgases verbrauchte Wärmemenge kompensieren. Tatsächlich wird aber - entgegen diesbezüglichen Aussagen in der DE-B-1 042 551 - die Gesamtreaktion stark endotherm, so daß ständig Energie zugeführt werden muß. Gemäß der DE-B-1 042 551 erfolgt die Hydrolyse im übrigen bei Temperaturen unter 25 °C. Das Verfahren kann auch kontinuierlich durchgeführt werden.
b) schlechte Mischbarkeit der Reaktanten (Unterschichtung und lokale Überhitzung)
   Aufgrund der Dichteunterschiede von PCl₃ und Wasser bzw. verdünnter Phosphoriger Säure besteht stets die Gefahr der Unterschichtung mit plötzlicher unkontrollierter Abreaktion. Gemäß FR-A-1.214.039 wird dieser Gefahr dadurch vorgebeugt, daß die Reaktion bei einer Temperatur oberhalb des Siedepunkts von PCl₃ (76 °C) durchgeführt wird. Dennoch wird häufig aufgrund örtlicher höherer Konzentration an PCl₃ die Bildung von Zersetzungsprodukten beobachtet. Gemäß FR-A-1.214.039 wird PCl₃ in eine Reaktionskolonne (Füllkörperkolonne) bei Temperaturen von 80 bis 100 °C eingeleitet. Der Reaktionskolonne ist eine zweite, beheizte Füllkörperkolonne aufgesetzt, durch die von oben her eine Mischung aus umgepumpten Reaktionsgemisch und Wasser herabrieselt. Am Fuß der Reaktionskolonne wird ständig rohes Reaktionsprodukt (H₃PO₃) abgezogen und teils im Kreislauf auf den Kopf der oberen Füllkörperkolonne gepumpt, teils auf reine H₃PO₃ aufgearbeitet. Das entstehende HCl-Gas wird am Kopf der oberen Füllkörperkolonne abgezogen. Eine stöchiometrische Menge Wasser wird dem umgepumpten Reaktionsgemisch kurz vor Eintritt in die obere Füllkörperkolonne zugegeben.
c) Verluste an PCl₃ über die Gasphase
   Bei den technisch angewandten Verfahren wird stets ein Teil des eingesetzten PCl₃ von dem bei der Reaktion entstehenden Chlorwasserstoffgas mitgerissen und gelangt so in die HCl-Absorptionsstufe. Neben der hierdurch bedingten Verminderung der Wirtschaftlichkeit wird durch diese Verunreinigung der Verkaufswert der gewonnenen konzentrierten Salzsäure stark herabgesetzt. Die US-A-2,684,286 beschreibt ein kontinuierliches Verfahren zur Herstellung von H₃PO₃ durch Hydrolyse von PCl₃ mit einem 20 bis 40 %igen stöchiometrischen Überschuß an Wasser bei Temperaturen unterhalb von 76 °C, vorzugsweise bei 40 bis 60 °C. Die Ausgangsstoffe werden hierbei in eine Vorlage eines Gemischs aus H₃PO₃ und Salzsäure eingeleitet. Das über Kopf des Reaktionsgefäßes entweichende Chlorwasserstoffgas wird zurückgewonnen, enthält aber üblicherweise noch etwas PCl₃.

Es ist die Aufgabe der vorliegenden Erfindung, die bei den bekannten Verfahren auftretenden Schwierigkeiten zu vermeiden und eine Lösung für die geschilderten Probleme aufzuzeigen.

Die Erfindung betrifft ein kontinuierliches Verfahren zur Herstellung von Phosphoriger Säure unter gleichzeitiger Gewinnung von Salzsäure durch Hydrolyse von Phosphortrichlorid mit wäßriger Salzsäure bei erhöhter Temperatur in einer mit den Reaktionsprodukten beschickten Reaktionszone, die mit einer darüber angeordneten ersten Waschzone in offener Verbindung steht, auf deren Kopf ein Teil des Reaktionsproduktes vom Boden der Reaktionszone her im Kreislauf gepumpt wird, während Chlorwasserstoffgas über Kopf der ersten Waschzone und Phosphorige Säure aus dem Kreislauf abgezogen werden, welches dadurch gekennzeichnet ist, daß man zur Herstellung einer 60 bis 110 gew.-%igen Phosphorigen Säure, ber. als H₃PO₃-Äquivalent, unter gleichzeitiger Gewinnung einer reinen, 20,2 bis 42 gew.-%igen Salzsäure das über Kopf der ersten Waschzone entweichende Chlorwasserstoffgas in einer gekühlten, zweiten Waschzone mit einer, berechnet auf die in die Reaktionszone eingespeiste Menge Phosphortrichlorid, überstöchiometrischen Menge Wasser in Berührung bringt und je nach dem Grade der äußeren Kühlung der zweiten Waschzone auf eine Innentemperatur von 80 bis 110°C eine 32 bis 20,2 gew.-%ige Salzsäure erhält, die man als Ausgangsstoff in die Reaktionszone oder auf den Kopf der ersten Waschzone leitet, wobei man unter Berücksichtigung der Tatsache, daß die Konzentration der Salzsäure in der zweiten Waschzone um so niedriger und folglich die Temperatur in der Reaktionszone um so höher liegen, je weniger die zweite Waschzone von außen gekühlt wird - und umgekehrt -, die äußere Kühlung der zweiten Waschzone so steuert, daß die Temperatur in der Reaktionszone ohne Zuführung äußerer Kühl- oder Heizenergie konstant auf einem gewünschten Wert zwischen 90 und 130 °C gehalten wird, und daß man aus dem überschüssigen, bei der Reaktion jeweils neu entstehenden und am Kopf der zweiten Waschzone zusammen mit überschüssigem Wasserdampf ungelöst entweichenden Chlorwasserstoffgas in einer ggf. gekühlten Absorptionszone unter Zusatz von Wasser eine reine, 20,2 bis 42 gew.-%ige Salzsäure gewinnt.

Darüber hinaus kann das Verfahren der Erfindung bevorzugt und wahlweise dadurch gekennzeichnet sein, daß man
a) in der Absorptionszone eine 30 bis 36 gew.-%ige Salzsäure gewinnt,
b) in die zweite Waschzone als Reaktionswasser eine verdünnte Phosphorige Säure mit vorzugsweise weniger als 70 Gew.-% H₃PO₃ einleitet,
c) einen Teil des Reaktionsprodukts vom Boden der Reaktionszone im Kreislauf in deren obere Hälfte pumpt,
d) den vom Boden der Reaktionszone im Kreislauf in deren obere Hälfte gepumpten Teil des Reaktionsprodukts unterhalb der Oberfläche des Reaktionsproduktes tangential zur Wandung der Reaktionszone einleitet,
e) die aus dem Kreislauf des Reaktionsprodukts abgezogene Phosphorige Säure durch Abstreifen oder Aufkonzentrieren unter vermindertem Druck von Chlorwasserstoff und Wasser befreit.

Unter einer mehr als 100 gew.-%igen Phosphorigen Säure, berechnet als H₃PO₃-Äquivalent, ist eine Phosphorige Säure zu verstehen, die wesentliche Anteile an Pyrophosphoriger Säure (H₄P₂O₅, früher auch Diphosphorige Säure, jetzt Diphosphonsäure genannt) enthält und auf Zusatz (mindestens) stöchiometrischer Mengen Wasser, bei Raumtemperatur oder schneller bei erhöhter Temperatur, eine (höchstens) 100 gew.-%ige Phosphorige Säure (H₃PO₃) liefert. Beispielsweise bestehen 100 g einer 110 gew.-%igen Phosphorigen Säure aus nur 19 g H₃PO₃ neben 81 g H₄P₂O₅. Auf Zusatz von 10 g H₂O - entsprechend der stöchiometrisch-äquivalenten Menge - entstehen aus den 81 g H₄P₂O₅ 91 g H₃PO₃ und man erhält insgesamt 110 g einer 100 gew.-%igen H₃PO₃.

Bei der Durchführung des Verfahrens der Erfindung ergeben sich folgende Vorteile:
1. Es kann Phosphorige Säure, ggf. im Gemisch mit Pyrophosphoriger Säure, in einem weiten Konzentrationsbereich, nämlich von 60 bis 110 Gew.-%, hergestellt werden;
2. durch eine Variation der Konzentration der zur Hydrolyse eingesetzten wäßrigen Salzsäure zwischen 20,2 und 32 Gew.-% wird eine gute Steuerung der Gesamt-Wärmebilanz im Reaktionsgefäß ermöglicht;
3. es wird eine sehr gute Durchmischung des Reaktorinhalts gewährleistet;
4. es werden keine Verluste an PCl₃ festgestellt, so daß aus dem bei der Hydrolyse von PCl₃ entstehenden reinen HCl-Gas eine reine konzentrierte 20,2 bis 42 gew.-%ige Salzsäure hergestellt werden kann.

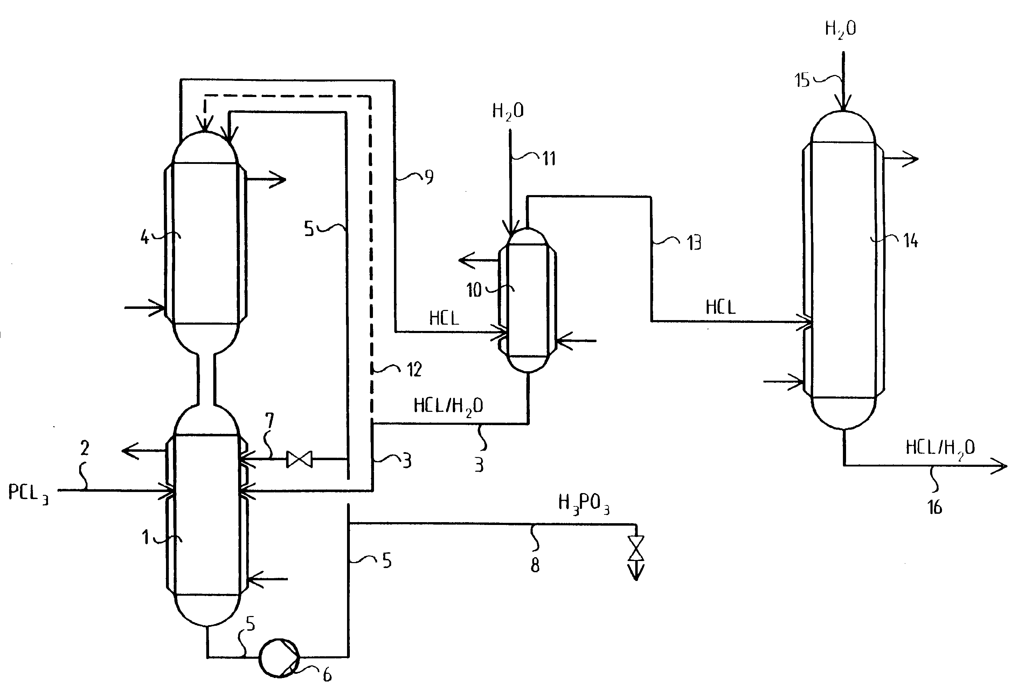

Das Verfahren der Erfindung sei nachfolgend anhand der beigefügten Zeichnung näher erläutert:

In die obere Hälfte des beheizbaren Reaktors 1, in dem sich bereits eine mit HCl-Gas gesättigte Phosphorige Säure der gewünschten, zwischen 60 und 110 Gew.-% liegenden Konzentration (berechnet als H₃PO₃-Äquivalent) befindet, werden unterhalb der Oberfläche der vorgelegten Phosphorigen Säure gleichzeitig über Leitung 2 PCl₃ und über Leitung 3 eine 20,2 bis 32 gew.-%ige Salzsäure in etwa stöchiometrischen Mengen eingeleitet. Die Temperatur im Reaktor 1 wird auf 90 bis 130 °C gehalten. Je niedriger die Konzentration und je höher die Temperatur der vorgelegten Phosphorigen Säure sind, desto höher ist der Umsatz des PCl₃. Er beträgt jedoch mindestens 75 %.

Das bei der Reaktion entstehende HCl-Gas und üblicherweise mitgerissene Restmengen an PCl₃ entweichen über Kopf des Reaktors 1 und gelangen in die beheizbare erste Waschkolonne 4, die mit Füllkörpern gefüllt ist. Am Boden des Reaktors 1 wird kontinuierlich Reaktionsgemisch abgezogen und im Kreislauf über die beheizte Leitung 5 mit Hilfe der Pumpe 6 auf den Kopf der Waschkolonne 4 gepumpt. Auf diese Weise werden die Restmengen PCl₃ in der Waschkolonne 4 zu H₃PO₃ hydrolysiert und in den Reaktor 1 zurückgespült.

Durch die beheizte Zweigleitung 7 wird Reaktionsgemisch kontinuierlich aus Leitung 5 entnommen und im Kreislauf in die obere Hälfte des Reaktors 1 geleitet, wodurch eine gute Durchmischung des Reaktorinhalts gewährleistet ist, die noch verbessert werden kann, wenn man den Eingangsstutzen der Leitung 7 in den Reaktor 1 unterhalb der Oberfläche des Reaktionsprodukts tangential zur Reaktorwandung verlegt. Die erforderliche gute Durchmischung kann aber auch durch Installation und Betrieb eines Rührers im Reaktor 1 erreicht werden.

Durch die beheizte Zweigleitung 8 wird weiterhin kontinuierlich Reaktionsgemisch aus Leitung 5 abgezogen und auf reine Phosphorige Säure einer gewünschten Konzentration zwischen 60 und 110 Gew.-%, berechnet als H₃PO₃-Äquivalent, aufgearbeitet. Die Abtrennung von Wasser und HCl erfolgt bevorzugt mittels Abstreifung mit Inertgas oder unter vermindertem Druck.

Das in der Waschkolonne 4 gewaschene HCl-Gas strömt über Leitung 9 in die zweite, mit Kühlwasser beaufschlagbare Waschkolonne 10 ein. Die Waschkolonne 10 wird aus Leitung 11 mit einer, berechnet auf die in den Reaktor 1 eingeführte Menge PCl₃, überstöchiometrischen Menge Wasser beaufschlagt. Im HCl-Gasstrom evtl. noch vorhandene Restmengen an PCl₃ werden in der Waschkolonne 10 zu H₃PO₃ umgesetzt. Die räumliche Trennung der H₂O-Zufuhr (in der Waschkolonne 10) von der PCl₃-Zufuhr (im Reaktor 1) bietet über die praktisch quantitative Entfernung des PCl₃ aus den Reaktionsgasen hinaus den Vorteil, daß durch unterschiedlich starke Kühlung dieser Waschkolonne 10 auf etwa 80 bis 110°C auf einfache Weise die Konzentration der hier aus dem HCl-Gasstrom und dem Wasser gebildeten Salzsäure in weiten Grenzen zwischen 20,2 und 32 Gew.-% HCl variiert werden kann. Dabei liegt die Salzsäurekonzentration bei einer Kühlung auf etwa 80 °C bei etwa 32 Gew.-% und bei einer Kühlung auf etwa 110 °C bei etwa 20,2 Gew.-%. Diese Salzsäure wird dem Reaktor 1 über Leitung 3 zur Hydrolyse des eingesetzten PCl₃ kontinuierlich zugeführt. Durch das Einstellen einer bestimmten Temperatur von 80 bis 110 °C und damit einer bestimmten Konzentration der Salzsäure (20,2 bis 32 Gew.-%) in der Waschkolonne 10 kann nun im Reaktor 1 die bei der Hydrolyse des PCl₃ freiwerdende Wärmemenge die zur Entfernung der zugeführten HCl-Menge benötigte Wärmemenge exakt kompensieren.

Statt über Leitung 3 in den Reaktor 1 kann die Salzsäure auch über die Leitungen 3 und 12 auf den Kopf der ersten Waschkolonne 4 aufgegeben werden. Dies ist beispielsweise dann von Vorteil, wenn aufgrund einer hohen Konzentration (> 90 Gew.-%) der im Reaktor 1 befindlichen Phosphorigen Säure der Umsatz des PCl₃ im Reaktor 1 nur zwischen 75 und 85 % liegt und dementsprechend eine größere Menge des nicht umgesetzten PCl₃ in die Waschkolonne 4 aufsteigt und von dort (unter Hydrolyse zu H₃PO₃) zurückgewaschen werden muß.

Anstelle von reinem Wasser kann über Leitung 11 auch eine verdünnte wäßrige Lösung von Phosphoriger Säure mit Erfolg eingesetzt werden. Auf diese Weise kann das Verfahren der Erfindung nebenbei auch zur Konzentrierung verdünnter Phosphoriger Säure dienen.

Das nach der zweiten Waschkolonne 10 verbleibende, nahezu reine HCl-Gas strömt zusammen mit überschüssigem Wasserdampf über Leitung 13 in die mit Füllkörpern gefüllte und ggf. gekühlte Absorptionskolonne 14 ein, die über Kopf durch Leitung 15 mit Wasser berieselt wird. Je nach Wassermenge kann man am Boden der Absorptionskolonne 14 über Leitung 16 eine 20,2 bis 42 gew.-%ige reine Salzsäure abziehen.

### Beispiel 1

Im Reaktor 1 befindet sich eine HCl-gesättigte 88,7 %ige wäßrige H₃PO₃ -Lösung bei einer Temperatur von 97°C. Durch die Eindosierung von 16,0 kg/h Phosphortrichlorid über Leitung 2 in den Reaktor 1 und 8,0 kg/h Wasser über Leitung 11 in die zweite Waschkolonne 10 bei gleichzeitiger Produktabnahme über Leitung 8 wird ein gleichmäßiger Füllstand im Reaktor 1 gewährleistet. Gleichzeitig stellt sich bei einer Kühlwasserzufuhr von 0,07 m³/h in den Mantel der zweiten Waschkolonne 10 im Innern von 10 eine Temperatur von 94°C ein. Nach erfolgter Gleichgewichtseinstellung (ca. 1 h) wird die Beheizung/Kühlung des Reaktors 1 und der ersten Waschkolonne 4 abgeschaltet. Nach etwa einer weiteren Stunde hat sich ein neuer stationärer Zustand ergeben; die Reaktortemperatur beträgt 107 - 109°C und bleibt für den weiteren Versuchszeitraum (12 h) ohne Zuführung äußerer Kühl- oder Heizenergie konstant. Die Temperatur in der zweiten Waschkolonne 10 liegt weiterhin bei 94°C, die Konzentration der Salzsäure ist 28,9 % (Leitung 3).

Über den gesamten Versuchszeitraum werden aus dem Umpump (Leitung 5) durch Leitung 8 10,8 kg/h Reaktionsprodukt entnommen, bestehend aus 88,7 % H₃PO₃, 8,4 % H₂O und 2,9 % HCl. Durch Aufkonzentrierung bei 140°C und 50 mbar werden Chlorwasserstoff und Wasser weitgehend entfernt und man erhält 9,65 kg/h H₃PO₃ (99 %). Durch die Zugabe von 23,0 kg/h H₂O durch Leitung 15 in die gekühlte Absorptionsstufe 14 erhält man 36,2 kg/h einer 34,3 %igen Salzsäure (Leitung 16).

### Beispiel 2 (Vergleichsbeispiel)

Unter ansonsten gleichen Vorbedingungen wie in Beispiel 1 wird in der zweiten Waschkolonne 10 eine Kühlwassermenge von 0,40 m³/h eingesetzt; es ergibt sich eine Innentemperatur von 63°C und eine Salzsäure-Konzentration von 35,1 %. Nach 1 h wird die Beheizung des Reaktors 1 und der ersten Waschkolonne 4 abgeschaltet. Man beobachtet ein schnelles Absinken der Reaktortemperatur, so daß nach 12 min eine Innentemperatur im Reaktor 1 von 90°C gemessen wird. Beim Erreichen einer Temperatur von 78°C (nach 35 min) wurde der Versuch abgebrochen, da beim Vorliegen von flüssigem Phosphortrichlorid aufgrund des Dichteunterschieds von PCl₃ und Wasser bzw. verdünnter Phosphoriger Säure die Gefahr der Unterschichtung mit plötzlicher unkontrollierter Abreaktion besteht.

## Patentansprüche

1. Kontinuierliches Verfahren zur Herstellung von Phosphoriger Säure unter gleichzeitiger Gewinnung von Salzsäure durch Hydrolyse von Phosphortrichlorid mit wäßriger Salzsäure bei erhöhter Temperatur in einer mit den Reaktionsprodukten beschickten Reaktionszone, die mit einer darüber angeordneten ersten Waschzone in offener Verbindung steht, auf deren Kopf ein Teil des Reaktionsprodukts vom Boden der Reaktionszone her im Kreislauf gepumpt wird, während Chlorwasserstoffgas über Kopf der ersten Waschzone und Phosphorige Säure aus dem Kreislauf abgezogen werden, dadurch gekennzeichnet, daß man zur Herstellung einer 60 bis 110 gew.-%igen Phosphorigen Säure, ber. als H₃PO₃-Äquivalent, unter gleichzeitiger Gewinnung einer reinen, 20,2 bis 42 gew.-%igen Salzsäure das über Kopf der ersten Waschzone entweichende Chlorwasserstoffgas in einer gekühlten, zweiten Waschzone mit einer, berechnet auf die in die Reaktionszone eingespeiste Menge Phosphortrichlorid, überstöchiometrischen Menge Wasser in Berührung bringt und je nach dem Grade der äußeren Kühlung der zweiten Waschzone auf eine Innentemperatur von 80 bis 110°C eine 32 bis 20,2 gew.-%ige Salzsäure erhält, die man als Ausgangsstoff in die Reaktionszone oder auf den Kopf der ersten Waschzone leitet, wobei man unter Berücksichtigung der Tatsache, daß die Konzentration der Salzsäure in der zweiten Waschzone um so niedriger und folglich die Temperatur in der Reaktionszone um so höher liegen, je weniger die zweite Waschzone von außen gekühlt wird - und umgekehrt -, die äußere Kühlung der zweiten Waschzone so steuert, daß die Temperatur in der Reaktionszone ohne Zuführung äußerer Kühl- oder Heizenergie konstant auf einem gewünschten Wert zwischen 90 und 130 °C gehalten wird; und daß man aus dem überschüssigen, bei der Reaktion jeweils neu entstehenden und am Kopf der zweiten Waschzone zusammen mit überschüssigem Wasserdampf ungelöst entweichenden Chlorwasserstoffgas in einer ggf. gekühlten Absorptionszone unter Zusatz von Wasser eine reine, 20,2 bis 42 gew.-%ige Salzsäure gewinnt.

2. Verfahren nach Anspruch 1, dadurch gekennzeichnet, daß man in der Absorptionszone eine 30 bis 36 gew.-%ige Salzsäure gewinnt.

3. Verfahren nach Anspruch 1 oder 2, dadurch gekennzeichnet, daß man in die zweite Waschzone als Reaktionswasser eine verdünnte Phosphorige Säure mit vorzugsweise weniger als 70 Gew.-% H₃PO₃ einleitet.

4. Verfahren nach mindestens einem der vorhergehenden Ansprüche, dadurch gekennzeichnet, daß man einen Teil des Reaktionsprodukts vom Boden der Reaktionszone im Kreislauf in deren obere Hälfte pumpt.

5. Verfahren nach Anspruch 4 , dadurch gekennzeichnet, daß man den vom Boden der Reaktionszone im Kreislauf in deren obere Hälfte gepumpten Teil des Reaktionsprodukts unterhalb der Oberfläche des Reaktionsprodukts tangential zur Wandung der Reaktionszone einleitet.

6. Verfahren nach mindestens einem der vorhergehenden Ansprüche, dadurch gekennzeichnet, daß man die aus dem Kreislauf des Reaktionsprodukts abgezogene Phosphorige Säure durch Abstreifen oder Aufkonzentrieren unter vermindertem Druck von Chlorwasserstoff und Wasser befreit.

## Claims

1. A continuous process for the preparation of phosphorous acid with simultaneous production of hydrochloric acid by hydrolysis of phosphorus trichloride with aqueous hydrochloric acid at high temperature in a reaction zone charged with the reaction products, which reaction zone is in open communication with a first scrubbing zone arranged on top of it, a portion of the reaction product being recycled from the bottom of the reaction zone into the top of the scrubbing zone, while hydrogen chloride gas from the top of the first scrubbing zone and phosphorous acid are removed from recirculation, wherein, in order to prepare a 60 to 110 % by weight phosphorous acid, calculated as H₃PO₃ equivalent, with simultaneous production of a pure, 20.2 to 42 % by weight hydrochloric acid, the hydrogen chloride gas escaping from the top of the first scrubbing zone is brought into contact, in a cooled, second scrubbing zone, with an overstoichiometric amount of water, calculated relative to the amount of phosphorus trichloride fed into the reaction zone, and, depending on the extent of external cooling of the second scrubbing zone to an internal temperature of 80 to 110°C, obtaining a 32 to 20.2% by weight hydrochloric acid, which is passed as starting material into the reaction zone or into the top of the first scrubbing zone, the external cooling of the second scrubbing zone, while taking into account that the less the second scrubbing zone is cooled from outside the lower the concentration of hydrochloric acid in the second scrubbing zone and consequently the higher the temperature in the reaction zone - and vice versa -being controlled such that the temperature in the reaction zone is kept constant at a desired value from 90 to 130°C without introducing any external cooling or heating energy; and obtaining a pure, 20.2 to 42% by weight hydrochloric acid in an optionally cooled absorption zone with the addition of water from the excess hydrogen chloride gas newly formed in each reaction and escaping in undissolved form at the top of the second scrubbing zone together with excess water vapor.

2. The process as claimed in claim 1, wherein a 30 to 36% by weight hydrochloric acid is obtained in the absorption zone.

3. The process as claimed in claim 1 or 2, wherein a dilute phosphorous acid preferably containing less than 70% by weight of H₃PO₃ is introduced into the second scrubbing zone as water of reaction.

4. The process as claimed in at least one of the preceding claims, wherein a portion of the reaction product is recycled from the bottom of the reaction zone into the upper half thereof.

5. The process as claimed in claim 4, wherein the portion of the reaction product recycled from the bottom of the reaction zone into the upper half thereof is introduced below the surface of the reaction product tangentially to the wall of the reaction zone.

6. The process as claimed in at least one of the preceding claims, wherein the phosphorous acid removed from the recirculated reaction product is freed from hydrogen chloride and water by stripping or concentrating under reduced pressure.

## Revendications

1. Procédé continu pour la préparation d'acide phosphoreux avec obtention simultanée d'acide chlorhydrique, par hydrolyse de trichlorure de phosphore avec de l'acide chlorhydrique aqueux à température élevée dans une zone de réaction chargée des produits réactionnels, qui se trouve en liaison ouverte avec une première zone de lavage disposée au-dessus, à la tête de laquelle on recycle avec une pompe une partie du produit réactionnel issu du fond de la zone de réaction, pendant que l'on soutire du gaz chlorhydrique en tête de la première zone de lavage et de l'acide phosphoreux du circuit, caractérisé en ce que, pour préparer un acide phosphoreux à une concentration de 60 à 110 % en masse, calculée en tant qu'équivalents de H₃PO₃, en obtenant en même temps de l'acide chlorhydrique pur à une concentration de 20,2 à 42 % en masse, on met en contact dans une seconde zone de lavage refroidie le gaz chlorhydrique qui se dégage en tête de la première zone de lavage avec une quantité d'eau supérieure à la stoechiométrie par rapport.à la quantité de trichlorure de phosphore introduite dans la zone de réaction, et on obtient, selon le degré de refroidissement extérieur de la seconde zone de lavage à une température interne de 80 à 110°C, un acide chlorhydrique à une concentration de 32 à 20,2 % en masse, que l'on conduit comme produit de départ dans la zone de réaction ou en tête de la première zone de lavage, en réglant le refroidissement extérieur de la seconde zone de lavage de façon que, compte tenu du fait que la concentration de l'acide chlorhydrique dans la seconde zone de lavage est d'autant plus faible et donc la température dans la zone de réaction d'autant plus élevée que la seconde zone de lavage est moins refroidie de l'extérieur - et inversement -, la température dans la zone de réaction soit maintenue à une valeur désirée constante entre 90 et 130°C sans fourniture d'énergie de chauffage ou de refroidissement extérieure; et en ce que l'on obtient, à partir du gaz chlorhydrique en excès qui se reforme dans la réaction et qui se dégage non dissous en même temps que de la vapeur d'eau en excès en tête de la seconde zone de lavage, dans une zone d'absorption éventuellement refroidie, en ajoutant de l'eau, un acide chlorhydrique pur à une concentration de 20,2 à 42 % en masse.

2. Procédé selon la revendication 1, caractérisé en ce que l'on obtient dans la zone d'absorption un acide chlorhydrique à une concentration de 30 à 36 % en masse.

3. Procédé selon la revendication 1 ou 2, caractérisé en ce que l'on introduit comme eau de réaction dans la seconde zone de lavage un acide phosphoreux dilué ayant de préférence moins de 70 % en masse de H₃PO₃.

4. Procédé selon l'une au moins des revendications précédentes, caractérisé en ce que l'on recycle à l'aide d'une pompe une partie du produit réactionnel du fond de la zone de réaction dans sa moitié supérieure.

5. Procédé selon la revendication 4, caractérisé en ce que l'on introduit la partie du produit réactionnel recyclée du fond de la zone de réaction dans sa moitié supérieure au-dessous de la surface du produit réactionnel, tangentiellement à la paroi de la zone de réaction.

6. Procédé selon l'une au moins des revendications précédentes, caractérisé en ce que l'on débarrasse de l'acide chlorhydrique et de l'eau, par épuisement ou concentration sous pression réduite, l'acide phosphoreux soutiré du circuit du produit réactionnel.
